Europäisches Patentamt

European Patent Office

Office européen des brevets

(19)

(11) Veröffentlichungsnummer: **0 170 070**
**B1**

(12) **EUROPÄISCHE PATENTSCHRIFT**

(45) Veröffentlichungstag der Patentschrift: **29.08.90**

(51) Int. Cl.⁵: **F 02 P 5/04**

(21) Anmeldenummer: **85108119.0**

(22) Anmeldetag: **29.06.85**

(54) Verfahren und Anordnung zur Erzeugung eines Auslöseimpulses für die Zündung einer Brennkraftmaschine.

(30) Priorität: **02.07.84 AT 2131/84**

(43) Veröffentlichungstag der Anmeldung:
**05.02.86 Patentblatt 86/06**

(45) Bekanntmachung des Hinweises auf die Patenterteilung:
**29.08.90 Patentblatt 90/35**

(84) Benannte Vertragsstaaten:
**DE FR GB IT**

(56) Entgegenhaltungen:
**WO-A-82/02927**
**FR-A-2 466 623**
**FR-A-2 492 460**
**GB-A-2 060 061**
**US-A-4 130 097**

(73) Patentinhaber: **Atlas Fahrzeugtechnik GmbH**
**Eggenpfad 26**
**D-5980 Werdohl (DE)**

(72) Erfinder: **Blauhut, Reinhold**
**Eggenpfad 24**
**D-5980 Werdohl (DE)**

(74) Vertreter: **Hassler, Werner, Dr.**
**Postfach 17 04 Asenberg 62**
**D-5880 Lüdenscheid (DE)**

Courier Press, Leamington Spa, England.

EP 0 170 070 B1

**Beschreibung**

Die Erfindung betrifft ein Verfahren zur Erzeugung eines Auslöseimpulses für die Zündung einer Brennkraftmaschine, bei der der Auslöseimpuls bei einer vorgegebenen Kurbelwellenwinkelstellung, bezogen auf eine Bezugswinkelstellung, erzeugt wird, wobei in mindestens einem Verbrennungsraum der Brennkraftmaschine eine Ionenstrommessung erfolgt, wobei der Ionenstrommeßwert mit einem Sollwert unter Bildung eines Differenzwertes verglichen wird und in Abhängigkeit von diesem Differenzwert über ein Stellglied das Betriebsverhalten der Brennkraftmaschine geändert wird.

Der Spitzendruck im Brennraum einer Brennkraftmaschine muß bei einer bestimmten Stellung des Kolbens bzw. einer bestimmten Kurbelwellenwinkelstellung, bezogen auf eine Bezugswinkelstellung, normalerweise bezogen auf den oberen Totpunkt, erreicht werden, damit der Motorwirkungsgrad optimal ist. Wegen der endlichen Brenngeschwindigkeit innerhalb des gezündeten Luft-Kraftstoffgemisches muß der Zündimpuls mit steigender Drehzahl gegenüber dem oberen Totpunkt vorverlegt werden. Hierfür sind mechanische, elektronisch-analoge und digitale Zündsysteme in großer Zahl bekannt.

Die Brenngeschwindigkeit des Luft-Kraftstoffgemisches hängt unter anderem auch von der Füllung des Brennraumes ab, so daß im Teillastbereich die Brenngeschwindigkeit infolge der verringerten Füllung geringer wird. Die GB—A—2 060 061 beschreibt eine Anordnung, bei der Die Brenngeschwindigkeit mit einer Ionenstromsonde erfaßt wird, die zu der Zündelektrode koordiniert ist. Aus den genannten Gründen ist diese Anordnung unzureichend. Außerdem sind Spetialtünkerzen notwendig, wodurch diese Anordnung unpraktikabel wird.

Zur unmittelbaren Messung des Drucks ist in der FR-A—2 466 623 eine Drucksonde in dem Zylinderraum vorgeschlagen. Die erforderlichen speziellen Konstruktionenn machen auch diese Vorrichtung unpraktikabel. Mit dieser Technik ist auch eine Verschiebung des Zündimpulses nur in Abhängigkeit von wenigen Parametern, die vorprogrammiert sind, möglich. Änderungen weiterer Betriebsbedingungen, wie Kraftstoffqualität, Lufttemperatur, Motortemperatur, können praktisch nicht erfaßt werden, weil eine notwendige Sensorik in der Praxis zu aufwendig ist.

Aufgabe der Erfindung ist eine Optimierung des Zeitpunktes des Auslöseimpulses unter allen Betriebsbedingungen und für alle Betriebsparameter der Brennkraftmaschine sowie eine einfache Erfassung der Meßdaten.

Diese Aufgabe wird nach der Erfindung dadurch gelöst, daß der Ionenstrom in der Entladungsstrecke einer Zündkerze gemessen wird, daß als Ionenstrommeßwert die Spitzenwertwinkelstellung des Ionenstroms erfaßt wird, daß der Differenzwert zu einer Sollwinkelstellung gebildet wird und daß der Auslöseimpuls zeitlich im Sinne einer Verringerung des genannten Differenzwertes verschoben wird.

Die Erfindung nutzt die Tatsache aus, daß die Konzentration der Ladungsträger in einem brennenden Luft-Kraftstoff-Gemisch mit Druck und Temperatur des Gases ansteigt. Infolgedessen steigt auch der Ionenstrom mit zunehmenden Druck und steigender Temperatur an. Der Spitzenwert des Ionenstromes wird erfaßt. Dabei ist eine Auswertung als Spitzenwertwinkelstellung, bezogen auf eine Bezugswinkelstellung der Kurbelwelle, vorgesehen. Der absolute Ionenstromspitzenwert ist ohne Bedeutung.

Die Erfindung unterscheidet sich dadurch in nicht nahliegender Weise vom Stand der Technik, als durch Messung des Ionenstromes unmittelbar die Spitzenwertwinkelstellung des Ionenstromspitzenwertes und damit des Druckspitzenwertes im Verbrennungsraum erfaßt wird. Diese Spitzenwertwinkelstellung wird mit einer Sollwinkelstellung verglichen. Entsprechend dem erhaltenen Differenzwert wird der Auslöseimpuls mittels einer Regelschaltung so verschoben, daß der Differenzwert verschwindet. Die Erfindung ermöglicht also einen solchen Betrieb der Brennkraftmaschine, daß der Druckspitzenwert immer genau bei der vorgegebenen Winkelstellung erreicht wird. Als Ionenstromsonde eignet sich die Zündkerze selbst, der eine positive Meßspannung zugeführt wird.

Die Messung des Ionenstromes kann für eine Verbrennungskammer oder einen Zylinder des Verbrennungsmotors oder auch für alle Zylinder durchgeführt werden. Bei einer Messung in allen Zylindern lassen sich so Füllungsunterschiede ausgleichen. Bei einer Auswertung der Druckkurven aller Zylinder können die Winkelstellungen der Druckspitzenwerte gemittelt werden, um für den nächsten Arbeitszyklus ein gemitteltes Auslösesignal zur Verfügung zu haben, welches alle Zylinder in der gleichen Winkelstellung zündet.

Das Verfahren nach der Erfindung ist sowohl bei einer Erzeugung des Auslöseimpulses mithilfe analoger Schaltkreise als auch mithilfe digitaler Schaltkreise anwendbar.

Eine Anordnung nach der Erfindung mit digitaler Erzeugung des Auslöseimpulses ist durch folgende Merkmale gekennzeichnet:

a) ein auf eine Bezugsmarkierung (3) ausgerichteter Bezugsimpulssensor (5) erzeugt einen Bezugsimpuls pro Kurbelwellenumdrehung;

b) ein Zähler (8) ist mit seinem Rückstelleingang an dem Bezugsimpulssensor, mit seinem Zähleingang an den Zahnimpulssensor und mit seinem Sperreingang an eine Spitzenwertschaltung (23) angeschlossen;

c) die Spitzenwertschaltung (23) wertet den durch die Entladungsstrecke der Zündkerze fließenden Strom aus und gibt bei Erreichen des Ionenstromspitzenwertes eine Sperrsignal ab;

d) eine Vergleicherschaltung (25) vergleicht den Zählstand des Zählers (8) mit einem Sollwert auf der Eingangsleitungsgruppe (26) und gibt ein Signal ab, das anzeigt, ob der Ionenstromspitzenwert zu früh oder zu spät auftritt;

e) eine Auslöseschaltung (12) zählt die Zahnimpulse und gibt bei einem Voreinstellwert ein Auslösesignal ab, wobei entsprechend dem verfrühten oder verspäteten Auftreten des Ionenstromspitzenwertes zusätzliche Impulse additiv oder subtraktiv in die Auslöseschaltung (12) eingezählt werden.

Im folgenden wird die Erfindung unter Bezugnahme auf eine Anordnung zur digitalen Erzeugung des Auslöseimpulses erläutert. In den Figuren stellen dar:

Fig. 1 eine Blockschaltbild einer Anordnung nach der Erfindung und

Fig. 2 verschieden Wellenformen, die für den Betrieb der Brennkraftmaschine von Bedeutung sind.

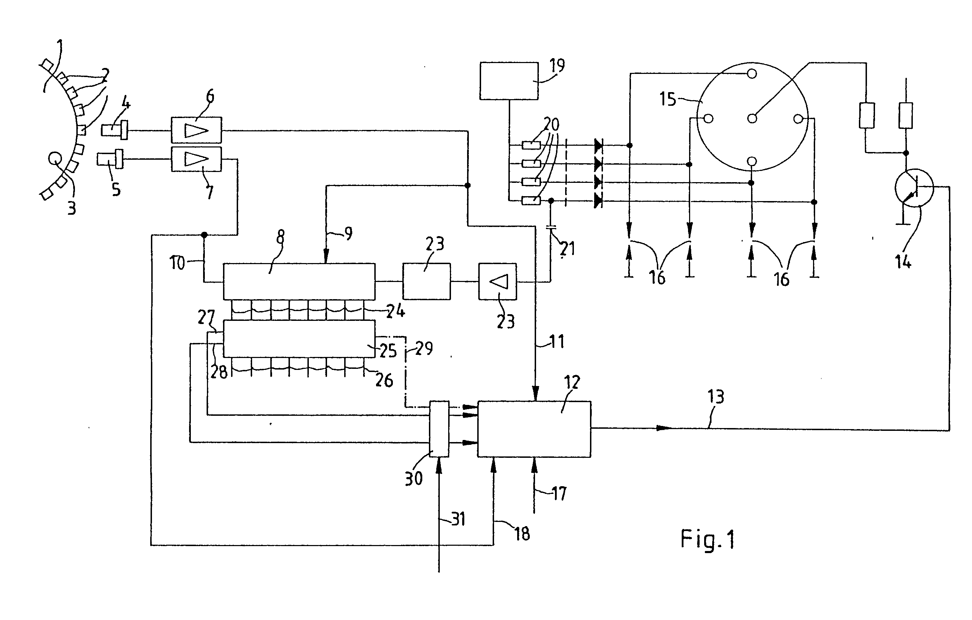

Fig. 1 zeigt einen Umfangsbereich des mit der Kurbelwelle gekoppelten Schwungrades 1 einer Verbrennungskraftmaschine. Im dargestellten Beispiel handel es sich um einen Ottomotor. Das Schwungrad 1 trägt einen Anlasserzahnkranz mit Zähnen 2 sowie einer zusätzlichen Markierung 3, die eine Bezugswinkelstellung festgelegt. Die Markierung 3 kann auch mit einem der Zähne 2 kombiniert sein. Dem Umfang des Schwungrades steht ein Zahnimpulssensor 4 sowie ein Bezugsimpulssensor 5 gegenüber, der die Markierung 3 erfaßt. Der Zahnimpulssensor 4 und der Bezugsimpulssensor 5 können auch in einem gemeinsamen Sensor kombiniert sein. Jedem Sensor ist ein Verstärker 6, 7 und Impulsformer nachgeschaltet. Die Zahnimpulse können gegebenenfalls auch verdoppelt werden.

Die Erfindung sieht einen Zähler 8 zur Zählung der auf der Leitung 9 eintreffenden Zahnimpulse vor. Die Bezugsimpulse werden über die Leitung 10 in den Rückstelleingang des Zählers 8 eingeben und stellen den Zähler 8 jeweils auf den Nullwert zurück und lösen einen neuen Zählvorgang aus, so daß während jeder Kurbelwellenumdrehung ein Zählzyklus abläuft.

Die Winkelimpulse werden auf der Leitung 11 in eine Auslöseschaltung 12 zur Erzeugung eines Auslöseimpulses auf der Leitung 13 eingegeben. Die Leitung 13 führt zu einer Transistorzündschaltung 14, an die über einen Zündverteiler 15 die Zündkerzen 16 in den Verbrennungsräumen eines Verbrennungsmotors angeschlossen sind. Der Zündverteiler 15 kann selbstverständlich eine beliebige Bauart haben.

Die Auslöseschaltung 12 enthält im wesentlichen einen voreinstellbaren und rückstellbaren Zähler. Auf einer Leitung 17 ist ein Voreinstellwert eingebbar. Über die Leitung 18 liegen die Bezugsimpulse zur jeweiligen Rückstellung der Auslöseschaltung 12 auf den Voreinstellwert und zur Auslösung eines neuen Zählzyklus an. Ein Auslöseimpuls auf der Leitung 13 tritt beim Erreichen eines Überlaufwertes der Auslöseschaltung 12 auf.

Eine Gleichspannungsquelle 19 legt über Widerstände 20 jeweils einen Gleichstrom an die Zündkerzen 16 an. Die Entladungsstrecke der Zündkerzen 16 dient als Ionenstrommeßsonde für den durch die Gleichspannung erzeugten Ionenstrom. Der Ionenstrom eines jeden Zylinders bewirkt in dem betreffenden Widerstand 20 einen Spannungsabfall. Die Spannung wird über einen Kondensator 21, der nur für eine Ionenstrommeßsonde dargestellt ist, ausgekoppelt. Die Spannung wird in einer Verstärkerschaltung 22 verstärkt und in eine Spitzenwertschaltung 23 eingegeben. Diese Spitzenwertschaltung 23 ermittelt den Ionenstromspitzenwert. Der Ionenstromspitzenwert entspricht dem jeweiligen Druckspitzenwert im Verbrennungsraum. Der Ionenstromspitzenwert wird hinsichtlich seiner zeitlichen Lage erfaßt. Der Absolutwert des Ionenstromspitzenwertes ist von geringer Bedeutung. Infolgedessen ist die Spitzenwertschaltung 23 selbsteinstellend aufgebaut.

Das Ausgangssignal der Spitzenwertschaltung 23 liegt an dem Sperreingang des Zählers 8 an und sperrt jeweils den Zählvorgang, so daß dann auf der Ausgangsleitungsgruppe 24 des Zählers 8 die jeweilige Spitzenwertwinkelstellung für den Ionenstromspitzenwert bzw. den Spitzenwertes des Verbrennungsdruckes dargestellt wird. Der betreffende Zählstand ist in Zahnimpulsen bzw. Winkelimpulsen gegenüber einer Bezugswinkelstellung angegeben.

Auf einer Eingangsleitungsgruppe 26 wird eine Sollwinkelstellung in die Vergleicherschaltung 25 eingegeben. Der Wert der Spitzenwertwinkelstellung der Ausgangsleitungsgruppe 24 liegt ebenfalls an der Vergleicherschaltung 25 an. In der Vergleicherschaltung 25 werden diese beiden Zählstände miteinander verglichen. Je nach der Abweichung der Spitzenwertwinkelstellung von der Sollwinkelstellung erscheint auf der Ausgangsleitung 27 oder 28 ein Signal, das eine Verfrühung des Ionenstromspitzenwertes bzw. eine Verspätung desselben gegenüber der Sollwinkelstellung anzeigt. Z.B. erscheint auf der Ausgangsleitung 27 ein Signal, wenn der Wert der Spitzenwertwinkelstellung größer als der Sollwinkelstellung ist, d.h. wenn der Ionenstromspitzenwert und damit der Spitzenwert des Zylinderdruckes verspätet auftritt. Entsprechend erscheint auf der Ausgangsleitung 28 ein Signal, wenn der Spitzenwert des Zylinderdrucks verfrüht auftritt. Gegebenenfalls kann man eine weitere Ausgangsleitung 29 vorsehen, auf der die Größe der Abweichung angezeigt wird.

Die Ausgangsleitungen 27, 28, und 29 liegen über eine Torschaltung 30 an dem Eingang der Auslöseschaltung 12 an. Die Eingangsleitung 31 für die Torschaltung 30 erhält ein Sperrsignal, wenn die Drehzahl einen unteren Grenzwert unterschreitet. Bei niederen Drehzahlen, also insbesondere beim Anlaßvorgang und in der Leerlaufstellung, erfolgt also kein Verschiebung des Auslöseimpulses gegenüber dem Sollwert.

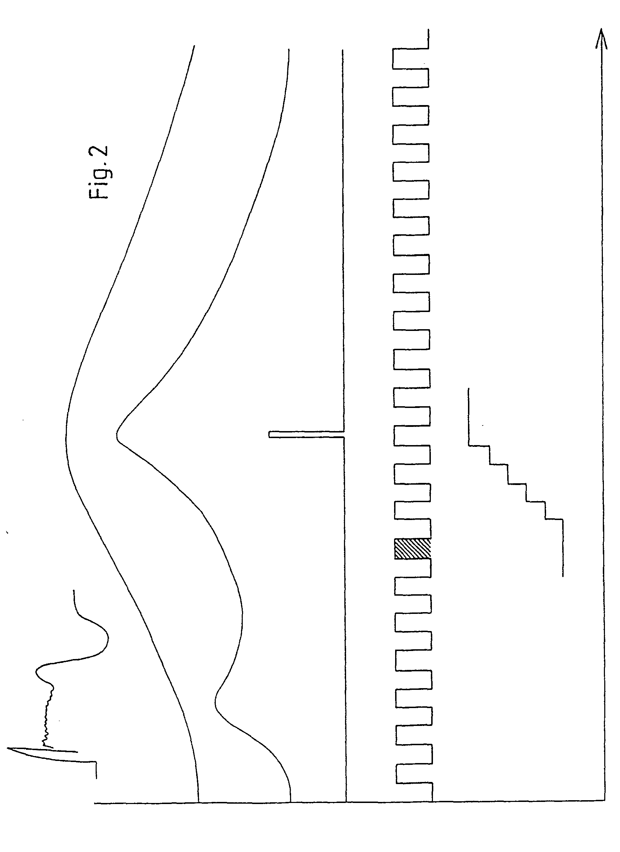

Fig. 2 zeigt verschiedene Kennlinien. In der obersten Reihe ist der Spannungsverlauf eines Zündfunkens dargestellt. Die zweite Reihe gibt den Verlauf des Zylinderdrucks an. In der folgenden Reihe ist der Verlauf des Ionenstromes darge-stellt. Man erkennt, daß der Ionenstromspitzen-wert mit dem Spitzenwert des Zylinderdrucks übereinstimmt. Die folgende Reihe gibt den Bezugsimpuls an. In einer weiteren Reihe sind die Zahnimpulse angegeben. Ein Zahnimpuls ist mar-kiert. Dieser Zahnimpuls entspricht der Sollwinkel-stellung für den Druckspitzenwert. Nach diesem Zahnimpuls gezählte Zahnimpulse der untersten Kennlinie geben die Größer der Verspätung des Ionenstromspitzenwertes gegenüber der Sollwin-kelstellung an. Entsprechend dieser Verspätung werden zusätzliche subtraktive Impulse in die Auslöseschaltung 12 eingegeben, damit der Auslöseimpuls auf der Leitung 13 während der nachstfolgenden Kurbelwellenumdrehung früher auftritt und der Zündimpuls auf eine früheren Zeitpunkt verlegt wird. Dementsprechend wird der Ionen-stromspitzenwert und damit der Druckspitzenwert auf die Sollwinkelstellung verschoben.

Im Vorigen ist die Erfindung für einen Regelkreis erläutert, der einem Zylinder eines Verbrennungsmotors zugeordnet ist. Man kann auch für jeden Zylinder einen gesonderten Regelkreis vorsehen. Entsprechend kann man für jeden Zylinder einen gesondert geregelten Auslöseimpuls ableiten. Mann kann auch für alle Zylinder einen gemeinsamen gemittelten Auslöseimpuls bestimmen.

## Patentansprüche

1. Verfahren zur Erzeugung eines Auslöseimpulses für die Zündung einer Brennkraftmaschine, bei der der Auslöseimpulse bei einer vorgegebenen Kurbelwellenwinkelstellung, bezogen auf eine Bezugswinkelstellung, erzeugt wird, wobei in min-destens einem Verbrennungsraum der Brennkraft-maschine eine Ionenstrommessung erfolgt, wobei der Ionenstrommeßwert mit einem Sollwert unter Bildung eines Differenzwertes verglichen wird und in Abhängigkeit von diesem Differenzwert über ein Stellglied das Betriebsverhalten der Brennkraft-maschine geändert wird, dadurch gekennzeichnet, daß der Ionenstrom in der Entladungsstrecke einer Zündkerze gemessen wird, daß als Ionenstrom-meßwert die Spitzenwertwinkelstellung des Ionenstroms erfaßt wird, daß der Differenzwert zu einer Sollwinkelstellung gebildet wird und daß der Auslöseimpuls zeitlich im Sinne einer Verringerung des genannten Differenzwertes verschoben wird.

2. Anordnung zur Durchführung des Verfahrens nach Anspruch 1, wobei ein auf die Zähne des Anlasserzahnkranzes ausgerichteter Zahnimpuls-sensor eine der Kurbelwellendrehung proportio-nale Impulsfolge erzeugt, gekennzeichnet durch folgende Merkmale:

a) ein auf eine Bezugsmarkierung (3) ausgerichteter Bezugsimpulssensor (5) erzeugt einen Bezugs-simpuls pro Kurbelwellenumdrehung;

b) ein Zähler (8) ist mit seinem Rückstelleingang an dem Bezugsimpulssensor, mit seinem Zähleingang an den Zahnimpulssensor und mit seinem Sperreingang an eine Spitzenwertschaltung (23) angeschlossen;

c) die Spitzenwertschaltung (23) wertet den durch die Entladungsstrecke der Zündkerze fließenden Strom aus und gibt bei Erreichen des Ionenstromspitzenwertes ein Sperrsignal ab;

d) eine Vergleicherschaltung (25) vergleicht den Zählstand des Zählers (8) mit einem Sollwert auf der Eingangsleitungsgruppe (26) und gibt ein Signal ab, das anzeigt, ob der Ionenstromspitzen-wert zu früh oder zu spät auftritt;

e) eine Auslöseschaltung (12) zählt die Zahnimpulse und gibt bei einem Voreinstellwert ein Auslösesignal ab, wobei entsprechend dem verfrühten oder verspäteten Auftreten der Ionen-stromspitzenwertes zusätzliche Impulse additive oder subtraktiv in die Auslöseschaltung (12) einge-zählt werden.

3. Anordnung nach Anspruch 2, dadurch gekennzeichnet, daß die Auslöseschaltung (12) einen voreinstellbaren Zähler umfaßt.

4. Anordnung nach Anspruch 2 oder 3, dadurch gekennzeichnet, daß der Auslöseschaltung (12) eine Torschaltung (30) vorgeschaltet ist, die bei Unterschreiten eines Drehzahlgrenzwertes die Zusatzimpulse aus der Vergleicherschaltung (25) absperrt.

## Revendications

1. Procédé pour produire une impulsion de déclenchement pour l'allumage d'un moteur à combustion interne, selon lequel l'impulsion de déclenchement est produite pour une position angulaire prédéterminée du vilebrequin, rapportée à une position angulaire de référence, une mesure d'un courant ionique est réalisée dans au moins une chambre de combustion du moteur à combustion interne, la valeur de mesure du courant ionique est comparée à une valeur de consigne moyennant la formation d'une valeur de différence et l'allure du fonctionnement du moteur à combustion interne est modifiée en fonction de cette valeur de différence, par l'intermédiaire d'un organe de réglage, caractérisé en ce qu'on mesure le courant ionique dans la section de décharge d'une bougie d'allumage, qu'on détecte comme valeur de mesure du courant ionique la position angulaire de valeur maximale de ce courant, qu'on forme la différence par rapport à une position angulaire de consigne et qu'on décale dans le temps l'impulsion d'allumage dans le sens d'une réduction de ladite valeur de différence.

2. Dispositif pour la mise en oeuvre du procédé selon la revendication 1, dans lequel un générateur d'impulsions aligné sur les dents de la couronne dentée du démarreur produit une suite d'impulsions proportionnelle à la rotation du vilebrequin, caractérisé par les caractéristiques suivantes:

a) un capteur (5) d'une impulsion de référence, aligné sur une marque de référence (3) produit une impulsion de référence pour chaque rotation du vilebrequin;

b) un compteur (8) est raccordé, par son entrée de remise à zéro au capteur d'impulsions de référence, par son entrée de comptage au capteur d'impulsions produites par les dents et par son entrée de blocage au circuit à valeur maximale (23);

c) le circuit à valeur maximale (23) évalue le courant circulant dans la section de décharge de la bougie d'allumage et délivre un signal de blocage, lorsque la valeur maximale du courant ionique est atteinte;

d) un circuit comparateur (25) compare l'état de comptage du compteur (8) à une valeur de consigne dans le groupe (26) des conducteurs d'entrée et délivre un signal indiquant si la valeur maximale du courant ionique apparaît trop tôt on trop tard;

e) un circuit de déclenchement (12) compte les impulsions produites par les dents et délivre, pour une valeur préréglée, un signal de déclenchement, auquel cas des impulsions supplémentaires sont comptées de façon additive ou soustractive dans le circuit de déclenchement (12), en fonction de l'apparition précoce ou retardée de la valeur maximale, du courant ionique.

3. Dispositif selon la revendication 2, caractérisé en ce que le circuit de déclenchement (12) comporte un compteur préréglable.

4. Dispositif suivant la revendication 2 ou 3, caractérisé par le fait qu'en amont du circuit de déclenchement (12) est branché un circuit de porte (30), qui, lorsque la vitesse de rotation tombe au-dessous d'une valeur limite, bloque les impulsions supplémentaires délivrées par le circuit comparateur (25).

**Claims**

1. Process for producing a trigger impulse for firing an internal combustion engine, wherein the trigger impulse is produced at a predetermined crankshaft angular position relative to a reference angular position, wherein an ionic current is measured in at least one combustion chamber of the internal combustion engine, wherein the measured value of the ionic current is compared with an ideal value to form a differential value and in dependence on this differential value the operating conditions of the internal combustion engine are altered by a setting member, characterised in that the ionic current is measured in the discharge path of a sparking plug the differential value with the ideal angular position is formed and the trigger impulse is displaced timewise in the sense of reducing the said differential value.

2. Arrangement for carrying out the process according to claim 1 wherein a tooth impulse sensor aligned with the teeth of the starting gear ring produces an impulse sequence which is proportional to the rotation of the crankshaft, characterised by the following features:

a) a reference impulse sensor (5) aligned with a reference marking (3) produces one reference impulse per crankshaft revolution;

b) a meter (8) is connected by its resetting input to the reference impulse sensor, by its meter input to the tooth impulse sensor and by its blocking input to a peak value circuit (23);

c) the peak value circuit (23) evaluates the current flowing through the discharge path of the sparking plug and releases a blocking signal when the ionic current peak value has been reached;

d) a comparison circuit (25) compares the meter state of the meter (8) with an ideal value on the input lead group (26) and releases a signal which shows whether the peak value of the ionic current is occurring too early or too late;

e) a trigger circuit (12) counts the tooth impulses and releases a trigger signal at a preset value wherein according to the early or late appearance of the ionic current peak value additional impulses are added or subtracted in the trigger circuit (12).

3. Arrangement according to claim 2 characterised in that the trigger circuit (12) includes a presettable meter.

4. Arrangement according to claim 2 or 3 characterised in that a gate circuit (30) is connected in front of the trigger circuit (12) and shuts off the additional impulses from the comparison circuit (25) when the speed boundary limit has not been reached.

Fig.1

EP 0 170 070 B1

Fig.2